# EUROPÄISCHE PATENTSCHRIFT

(11) **EP 2 948 786 B1**
(45) Veröffentlichungstag und Bekanntmachung des Hinweises auf die Patenterteilung: **27.04.2022**
(21) Anmeldenummer: 14700433.7
(22) Anmeldetag: 14.01.2014
(51) Int. Cl.: G01S 3/783, G05D 1/02, G08G 1/16

(54) **SYSTEM MIT FAHRZEUGEN UND VERFAHREN ZUM BETREIBEN EINES SYSTEMS MIT MEHREREN FAHRZEUGEN**
SYSTEM WITH VEHICLES AND METHOD FOR OPERATING A SYSTEM WITH A PLURALITY OF VEHICLES
SYSTÈME COMPRENANT DES VÉHICULES ET PROCÉDÉ POUR FAIRE FONCTIONNER UN SYSTÈME COMPRENANT PLUSIEURS VÉHICULES

(30) Priorität: 23.01.2013 DE 102013001079
(43) Veröffentlichungstag der Anmeldung: 02.12.2015
(73) Patentinhaber: SEW-EURODRIVE GmbH & Co. KG, 76646 Bruchsal (DE)
(72) Erfinder: HUA, Zhidong, 76137 Karlsruhe (DE); KEPPLER, Christoph Steffen, 76189 Karlsruhe (DE)
(86) Internationale Anmeldenummer: PCT/EP2014/000062
(87) Internationale Veröffentlichungsnummer: WO 2014/114430

(56) Entgegenhaltungen:
- EP-A1- 0 762 140
- WO-A2-03/038468
- DE-A1- 19 915 935
- DE-A1-102005 017 811
- DE-A1-102010 012 187

## Beschreibung

### Beschreibung:

Die Erfindung betrifft ein System mit Fahrzeugen und ein Verfahren zum Betreiben eines Systems mit mehreren Fahrzeugen.

Es ist allgemein bekannt, dass Fahrzeuge Leuchtquellen aufweisen, die zur Beleuchtung der Fahrbahn eingesetzt werden.

Aus der DE 199 15 935 A1 ist ein Verfahren zur Übertragung von Datensignalen in einem Verkehrssystem bekannt.

Aus der EP 0 762 140 A1 ist eine Positionserfassung für Fahrzeuge bekannt.

Aus der DE 10 2010 012 187 A1 ist ein Verfahren zur Bestimmung der Position eines Fahrzeuges innerhalb einer Anlage bekannt.

Aus der DE 10 2005 017 811 A1 ist ein Fahrerassistenzsystem bekannt.

Aus der WO 03/038468 A2 ist ein optisches Positionserfassungsverfahren für Strahlungsquellen, die an einem sich bewegenden Körper angeordnet sind, bekannt.

Der Erfindung liegt daher die Aufgabe zugrunde, ein System mit Fahrzeugen in kostengünstiger Weise und in unfallverhütender Weise weiterzubilden.

Erfindungsgemäß wird die Aufgabe bei dem System nach den in Anspruch 1 und bei dem Verfahren nach den in Anspruch 9 angegebenen Merkmalen gelöst.

Von Vorteil ist dabei, dass somit die Richtung, aus welcher ein anderes Fahrzeug, das mittels seiner steuerbaren Lichtquelle Licht aussendet, in einfacher Weise bestimmbar ist. Dabei wird eine Richtungsbestimmung ermöglicht, indem eine Fit-Funktion durch die Wertepaare, welche aus den von den Sensoreinheiten detektierten Lichtintensitätswerten und den zugehörigen Winkelabständen gebildet werden, gelegt wird, aus deren Maximum die Richtung bestimmt wird. Dabei ist der Verlauf der Fit-Funktion bekannt, wobei die Amplitude der Fit-Funktion, also eine Intensitätsamplitude, und eine Verschiebung der Fit-Funktion in Winkelabstandsrichtung angeordnet sind, Parameter sind, welche durch Optimierung, also durch Minimierung der Summe der quadrierten Abweichungen der Wertepaare zur Fit-Funktion, bestimmbar sind. Somit ist sogar eine verbesserte Auflösung bei der Bestimmung der Richtung erreichbar.

Erfindungsgemäß bestimmt ein Mittel zur Bestimmung der Entfernung von einem Fahrzeug aus zu einem anderen Fahrzeug aus dem detektierten größten Lichtintensitätswert ein Maß für die Entfernung des anderen Fahrzeugs. Von Vorteil ist dabei, dass eine Kennlinie verwendbar ist, da die Lichtquelle, insbesondere die Strahlleistung der Lichtquelle als bekannt vorausgesetzt werden darf. Somit ist eine einfache Bestimmung der Entfernung ermöglicht. Alternativ ist auch wiederum eine verbesserte Entfernungsbestimmung ermöglicht, wenn wiederum eine andere Fitfunktion an alle Messwerte der Sensoreinheiten angepasst wird.

Erfindungsgemäß sendet die Lichtquelle moduliertes Licht aus und die Auswerteeinheit bestimmt die Amplitude des Modulationssignals, insbesondere wobei das jeweilige Sensorsignal einem Filter zugeführt wird, welches das Signal-Rausch-Verhältnis verbessert. Von Vorteil ist dabei, dass mittels der Filterung Störquellen unterdrückbar sind. Somit ist das modulierte Signal auswertbar, wodurch einerseits die Bestimmung der Richtung und Entfernung sehr präzise ausführbar ist und andererseits bei der Übertragung von Daten eine geringe Fehlerrate erreichbar ist.

Bei einer vorteilhaften Ausgestaltung weist die jeweilige Sensoreinheit einen Sensor und ein optisches Abbildungssystem auf, wobei der Sensor im Brennpunkt des Abbildungssystems angeordnet ist,
wobei die Ausrichtung der Sensoreinheit der Verbindungslinie des Brennpunktes mit dem Mittelpunkt, insbesondere Schwerpunkt, des Abbildungssystems der Sensoreinheit entspricht,
insbesondere wobei das Abbildungssystem eine Anordnung von optischem Linsen aufweist und/oder wobei das Abbildungssystem parallel ins Abbildungssystem eintretende Strahlenbündel auf den Brennpunkt fokussiert,
insbesondere wobei das Abbildungssystem einer Sammellinse entspricht. Von Vorteil ist dabei, dass jede Sensoreinheit eine Ausrichtung aufweist, so dass eine Leuchtquelle, welche mittig in die Sensoreinheit einstrahlt, besonders hell wahrgenommen wird von dem Sensor.

Bei einer vorteilhaften Ausgestaltung weist das Abbildungssystem ein Autofocussystem auf.

Von Vorteil ist dabei, dass eine noch verbesserte Genauigkeit bei der Entfernungsbestimmung und Richtungsbestimmung erreichbar ist.

Bei einer vorteilhaften Ausgestaltung werden mittels der Modulation der Lichtintensität durch die steuerbare Lichtquelle zwischen den jeweiligen Fahrzeugen Daten übertragen. Von Vorteil ist dabei, dass eine hohe Datenrate erreichbar ist. Es sind sogar Bilddaten von einem auf das andere Fahrzeug übertragbar.

Bei einer vorteilhaften Ausgestaltung sind die Sensoreinheiten auf einem Träger, insbesondere auf einer Leiterplatte, angeordnet, insbesondere bilden also ein Array, sind also in einer eindimensionalen oder flächigen regelmäßigen Anordnung angeordnet. Von Vorteil ist dabei, dass eine Massenfertigung kostengünstig ausführbar ist. Dabei ist eine flächige regelmäßige Anordnung einfach ausführbar. Beispielswiese sind die Sensoreinheiten in einer Dreiecksgitter- oder Quadratgitterstruktur angeordnet. Bei eindimensionaler regelmäßiger Anordnung sind die Sensoreinheiten entlang einer eindimensionalen Kurve voneinander regelmäßig beabstandet angeordnet. Die Kurve ist dabei entweder ein Geradenabschnitt oder ein Kreisabschnitt oder ein Abschnitt einer anderen gekrümmt verlaufenden Kurve, wobei die Kurve vorzugsweise parallel zur Verfahrfläche verläuft, insbesondere so, dass die Sensoreinheiten jeweils denselben Abstand zur Verfahrfläche des Fahrzeugs aufweisen. Auf diese Weise ist eine einfache kostengünstige Detektion ermöglicht.

Bei einer vorteilhaften Ausgestaltung weist das jeweilige Fahrzeug ein jeweiliges Mittel zur Bestimmung der momentanen Bewegungsrichtung des anderen Fahrzeugs auf, wobei das jeweilige Mittel zur Bestimmung der momentanen Bewegungsrichtung aus zeitlich beabstandet ausgeführten Bestimmungen der relativen Position des anderen Fahrzeuges die momentane Bewegungsrichtung bestimmt unter Berücksichtigung der Eigenbewegung des jeweiligen Fahrzeugs, wobei die jeweilige relative Position aus dem bestimmten Abstand zum anderen Fahrzeug und der Ausrichtung der Sensoreinheit, welche die größte Lichtintensität detektiert, bekannt ist. Von Vorteil ist dabei, dass aus einem prognostizierten Bahnverlauf eine Kollisionsgefahr bestimmbar ist und somit zur Kollisionsvermeidung ein Lenkmanöver ausführbar ist.

Bei einer vorteilhaften Ausgestaltung steuert ein Mittel zur Kollisionsvermeidung die Lenkvorrichtung des jeweiligen Fahrzeugs derart an, dass eine zuvor prognostizierte Kollision mit dem anderen Fahrzeug vermieden wird, insbesondere wobei die Fahrtrichtung des jeweiligen Fahrzeugs derart verändert wird, dass der Winkel zwischen Fahrtrichtung und Ausrichtung der Sensoreinheit, welche die größte Lichtintensität detektiert, zumindest für einen Zeitabschnitt vergrößert wird. Von Vorteil ist dabei, dass eine Kollision vermeidbar ist. Da beide Fahrzeuge gleichartig aufgebaut sind, können beiden Fahrzeuge dasselbe Lenkmanöver ausführen und somit eine besonders effektive Kollisionsvermeidung realisieren. Vorzugsweise wird der Lenkwinkel derart verändert, dass dem anderen Fahrzeug ausgewichen wird und, nachdem die Detektion des anderen Fahrzeuges nicht mehr vorhanden ist oder das andere Fahrzeug außerhalb des Kollisionsgefährlichen Bereiches sich befindet, der Lenkwinkel entsprechend zurückgesteuert. Nach Beendigung des Ausweichmanövers kehrt das Fahrzeug also in seine zuvor vorgegebene Bahnkurve zurück.

Bei einer vorteilhaften Ausgestaltung weist jedes Fahrzeug eine Kamera auf zur Detektion von in dem als Anlage mit stationär angeordneten Markierungen ausgeführten System stationär angeordneten Markierungen, wobei die Markierungen von der Lichtquelle des jeweiligen Fahrzeugs beleuchtet werden und jeweils eine Identitätsinformation aufweisen, insbesondere so dass mit in einem Speicher des jeweiligen Fahrzeugs gespeicherten zur jeweiligen Identitätsinformation zugeordneten Positionsdaten eine Bestimmung der Position des jeweiligen Fahrzeugs ausführbar ist. Von Vorteil ist dabei, dass eine Erkennung der Position des Fahrzeugs in der Anlage ermöglicht ist. Dabei ist sozusagen eine Landkarte im Fahrzeug abgespeichert. Diese weist die Positionsdaten der durch ihre Identitätsinformation gekennzeichneten Markierungen auf. Wenn also nun eine Markierung erkannt wird, ist die Position der Markierung aus den im Speicher gespeicherten Informationen heraus bekannt. Als Markierungen sind beispielsweise Tafeln oder Aufkleber mit Strichcodes oder geometrischen Figuren verwendbar. Das Fahrzeug bestimmt mittels der Kamera, insbesondere mittels Bildauswertung der durch die Kamera aufgenommenen Bilder, die Entfernung des Fahrzeugs zur Markierung und somit die Position des Fahrzeugs.

Eine Verbesserung der Positionsbestimmung, insbesondere für eine höhere Genauigkeit, ist erreichbar, wenn von anderen Fahrzeugen aufgenommene Kamerabilder zusätzlich ausgewertet werden. Hierzu werden diese übertragen und dann am Fahrzeug ausgewertet.

Von Vorteil ist bei dem erfindungsgemäßen Verfahren, dass die Richtung eines anderen Fahrzeugs in einfacher Weise bestimmbar ist.

Erfindungsgemäß wird die Entfernung von einem Fahrzeug aus zu einem anderen Fahrzeug aus dem detektierten größten Lichtintensitätswert bestimmt. Von Vorteil ist dabei, dass eine sehr einfache Bestimmung anhand einer Kennlinie ausführbar ist.

Bei einer vorteilhaften Ausgestaltung werden mittels der Modulation der Lichtintensität zwischen den jeweiligen Fahrzeugen Daten übertragen. Von Vorteil ist dabei, dass eine störsichere Übertragung anwendbar ist.

Bei einer vorteilhaften Ausgestaltung wird vom jeweiligen Fahrzeug aus die Bahnkurve, insbesondere momentane Bahnkurve, des anderen Fahrzeugs bestimmt, indem zeitlich beabstandet die relative Position des anderen Fahrzeuges bestimmt wird und daraus die momentane Bewegungsrichtung und/oder Geschwindigkeit bestimmt wird, insbesondere unter Berücksichtigung der Eigenbewegung des jeweiligen Fahrzeugs, insbesondere wobei die jeweilige relative Position aus dem durch Ermittlung der Sensoreinheit mit dem größten detektierten Lichtintensitätswert bestimmten Abstand zum anderen Fahrzeug und der Ausrichtung der Sensoreinheit, welche die größte Lichtintensität detektiert, bestimmt wird. Von Vorteil ist dabei, dass Bei einer vorteilhaften Ausgestaltung wird zur Kollisionsvermeidung die Lenkvorrichtung des jeweiligen Fahrzeugs derart angesteuert, dass eine zuvor prognostizierte Kollision mit dem anderen Fahrzeug vermieden wird, insbesondere indem die Fahrtrichtung des jeweiligen Fahrzeugs derart verändert wird, dass der Winkel zwischen Fahrtrichtung und Ausrichtung der Sensoreinheit, welche die größte Lichtintensität detektiert, zumindest für einen Zeitabschnitt vergrößert wird. Von Vorteil ist dabei, dass eine Kollision in einfacher Weise vermeidbar ist.

Bei einer vorteilhaften Ausgestaltung werden zwischen den Fahrzeugen von einer jeweiligen Kamera eines Fahrzeugs aufgenommene Bilddaten übertragen zur Verbesserung der Auflösung bei der Positionsbestimmung. Von Vorteil ist dabei, dass eine hohe Datenübertragungsrate zwischen den Fahrzeugen realisierbar ist und somit auch die Kamerabilder anderer Fahrzeuge zusätzlich auswertbar sind.

Die Erfindung wird nun anhand von Abbildungen näher erläutert:

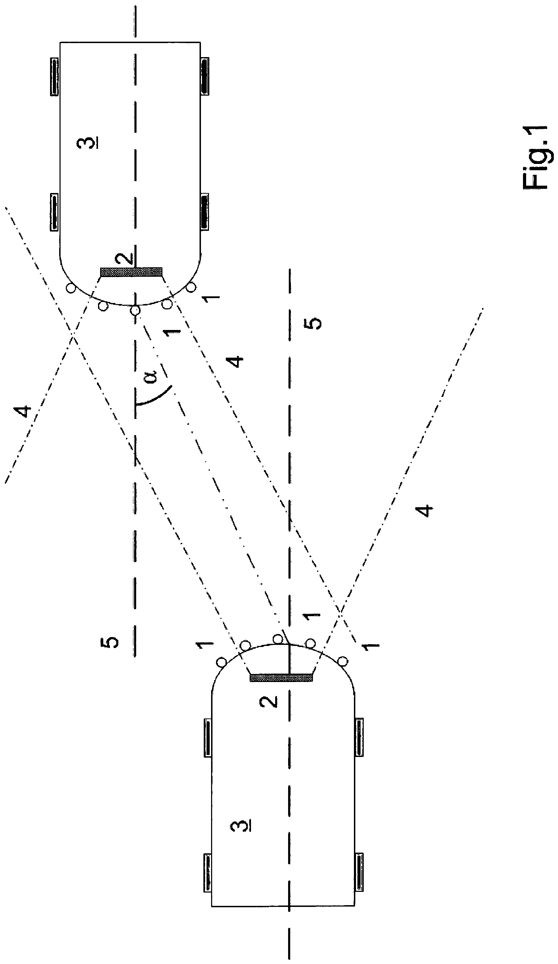

In der Figur 1 ist eine schematische Darstellung des erfindungsgemäßen Systems gezeigt.

Dabei sind zwei Fahrzeuge 3 entweder als schienengeführtes Fahrzeug, also Schienenfahrzeug, oder als fahrerloses Transportsystem (FTS) und/oder als automated guided vehicle (AGV) ausgeführt.

Die Fahrtrichtung 5 des jeweiligen Fahrzeugs 3 ist im dargestellten Zustandsbeispiel parallel, wobei ein Abstand der beiden Bahnen vorhanden ist.

Die Fahrzeuge 3 sind gleichartig ausgeführt. An ihrer Vorderseite weisen sie eine steuerbare Lichtquelle 2, insbesondere eine Vielzahl oder ein Array von steuerbaren Lichtquellen, auf. Der Sendekegel 4 ist derjenige Raumbereich, in welchen der wesentliche Teil der von der Lichtquelle 2 erzeugten Strahlung dringt.

In diesem Lichtkegel befindet sich das andere Fahrzeug 3. Jedes Fahrzeug 3 weist an seinem äußeren Umfang Sensoreinheiten 1 auf. Diese sind entlang einer gekrümmten und/oder gewölbten Fläche, insbesondere Gehäusefläche, voneinander beabstandet angeordnet, insbesondere regelmäßig beabstandet. Vorzugsweise weisen die Sensoreinheiten 1 jeweils denselben Abstand zur Verfahrfläche auf, sind also auf einer Kurve angeordnet und entlang der Kurve voneinander regelmäßig beabstandet. Die Kurve ist also eindimensional.

Jede Sensoreinheit 1 weist einen Sensor und ein Abbildungssystem, insbesondere Linse, auf, wobei der Sensor im Wesentlichen im Brennpunkt des Abbildungssystems, insbesondere Sammellinse, angeordnet ist.

Dabei ist die Verbindungslinie zwischen dem Mittelpunkt des Abbildungssystems, insbesondere der als Sammellinse ausgeführten Linse, und dem Sensor in Normalenrichtung der Fläche ausgerichtet.

Zur Verhinderung einer Kollision weist das Fahrzeug 3 jeweils eine Auswerteeinheit auf, welcher die Signale der Sensoreinheiten 1 zugeführt werden. Dabei können die Werte der von der Lichtquelle 2 des anderen Fahrzeugs 3 gesendeten, jeweils detektierten Lichtintensität verglichen und diejenige Sensoreinheit 1 bestimmt werden, welche den stärksten Wert für Lichtintensität aufweist.

Zur Bestimmung der relativen Position des anderen Fahrzeugs 3 wird als Richtungsvektor die in die Verfahrebene projizierte Normalenrichtung zur gewölbten Fläche am Ort der Sensoreinheit 1 verwendet. Im Fall der Kurve wird also die parallel zur Verfahrfläche und senkrecht zur Kurventangente weisende Richtung verwendet. Die zu der jeweiligen Sensoreinheit gehörenden Richtungsvektoren beziehungsweise Normalenrichtungen sind in einem Speicher der Auswerteeinheit des Fahrzeugs hinterlegt. Somit sind also die jeweiligen Ausrichtungen der Sensoreinheiten abgespeichert.

Um eine genaue Bestimmung erreichbar zu machen, sollte der Abstand zum anderen Fahrzeug sehr viel größer sein als der Abstand zwischen Mittelpunkt des Abbildungssystems und Sensor.

Zur Bestimmung der relativen Position ist aber auch die Bestimmung der Entfernung zum anderen Fahrzeug notwendig. Diese wird mittels der detektierten Leuchtstärke bestimmt. Hierzu wird die Amplitude der von der steuerbaren Lichtquelle 2 ausgesandten Strahlung bestimmt. Somit ist die Bestimmung unabhängig von Hintergrundbeleuchtung oder anderen nicht modulierten Lichtquellen. Da die Modulationsfrequenz zwischen 100 kHz und 10 MHz beträgt, ist das detektierte Signal einfach herausfilterbar aus dem sonstigen Signal. Sogar bei Frequenzen von 1 kHz und höher ist das Verfahren anwendbar und bei der Bestimmung ist ein sehr gutes Signal-Rauschverhältnis erreichbar.

Die steuerbare Lichtquelle 2 dient somit auch zur Beleuchtung der Fahrbahn oder des umgebenden Anlagenbereichs.

Die steuerbare Lichtquelle 2 ist jeweils als Vielzahl von steuerbaren Lichtquellen ausgeführt, beispielsweise mit einer Vielzahl von LEDs.

Vorzugsweise sind diese steuerbaren Lichtquellen flächig, insbesondere regelmäßig flächig, angeordnet.

Da jedes der Fahrzeuge 3 steuerbare Lichtquellen 2 aufweist, ist sogar die Erkennung eines Licht zumindest teilweise reflektierenden Hindernisses ermöglicht. Denn der modulierte Lichtanteil, welcher auf die Sensoreinheiten 1 zurückreflektiert wird, ist ebenfalls mit einem guten Signal-Rausch-Verhältnis detektierbar. Vorzugsweise ist die Größe des Hindernisses und Position des Hindernisses hinterlegt in einem Speicher der Auswerteeinheit. Somit ist die detektierte Lichtintensität gemäß einer Kennlinie auswertbar

Des Weiteren ist die Modulation des von der jeweiligen steuerbaren Lichtquelle 2 ausgestrahlten Lichts auch verwendbar, um Daten zwischen den Fahrzeugen 3 zu übertragen. Somit ist also eine bidirektionale Datenübertragung ermöglicht.

Hierzu wird eine Frequenz verwendet die höher ist als 1 kHz und somit vom menschlichen Auge nicht wahrgenommen werden kann. Besonders vorteilhaft hat sich hier eine Modulationsfrequenz zwischen 100 kHz und 10 MHz erwiesen, wobei in diesem Bereich die kostengünstigen steuerbaren Lichtquellen verwendbar sind.

Als Licht ist entweder sichtbares Licht verwendbar, so dass auch für Menschen erkennbare Beleuchtung durch die Leuchtquellen realisierbar ist, oder Infrarotlicht.

Bei einem weiteren erfindungsgemäßen Ausführungsbeispiel sind die Sensoreinheiten beliebig an der Vorderseite des Fahrzeugs 3 positioniert. Dabei ist aber die jeweilige Verbindungslinie einer jeweiligen Sensoreinheit zwischen dem Mittelpunkt des Abbildungssystems, insbesondere der als Sammellinse ausgeführten Linse, und dem Sensor nicht unbedingt in Normalenrichtung der Fläche an der Vorderseite des Fahrzeugs 3 ausgerichtet. Jedoch ist die Ausrichtung der jeweiligen Verbindungslinie im Speicher der Auswerteeinheit des Fahrzeugs gespeichert und wird somit berücksichtigt bei der relativen Positionsbestimmung des anderen Fahrzeugs 3. Denn diejenige Verbindungslinie, welche den geringsten Winkel zur Richtung, in welcher das andere Fahrzeugs 3 sich befindet, aufweist, gehört zu derjenigen Sensoreinheit, welche die größte Lichtintensität detektiert.

### Bezugszeichenliste

- 1: Sensoreinheit mit Sensor und Abbildungssystem, insbesondere Linse
- 2: steuerbare Lichtquelle, insbesondere Vielzahl oder Array von steuerbaren Lichtquellen
- 3: Fahrzeug
- 4: Sendekegel
- 5: Fahrtrichtung

## Patentansprüche

1. System mit Fahrzeugen (3),
wobei jedes Fahrzeug (3) eine steuerbare Lichtquelle (2) und Sensoreinheiten (1) aufweist,
wobei die Sensoreinheiten eines jeweiligen Fahrzeugs (3) zum Empfangen von von der steuerbaren Lichtquelle (2) eines anderen Fahrzeugs (3) gesendeten Lichts geeignet sind,
wobei jedes Fahrzeug jeweils eine Auswerteeinheit zur Auswertung der Sensorsignale aufweist,
wobei jede Sensoreinheit (1) am jeweiligen Fahrzeug (3) entlang einer gekrümmten und/oder gewölbten Fläche voneinander beabstandet angeordnet ist und eine Ausrichtung aufweist, deren
Winkelabstand zu einer am Fahrzeug (3) festgelegten Richtung, insbesondere Fahrrichtung bei Geradeausfahrt, in einem Speicher hinterlegt ist,
wobei die jeweilige Auswerteeinheit aus den Sensorsignalen der Sensoreinheiten (1) diejenige Richtung bestimmt, in welcher ein anderes Fahrzeug (3) sich befindet, welches Licht mittels seiner steuerbaren Lichtquelle (2) sendet,
wobei zur Bestimmung der Richtung die jeweilige Auswerteeinheit ein Mittel zur Bestimmung des Maximums einer Fitfunktion aufweist, wobei die Parameter der Fitfunktion durch eine Optimierung, also durch Minimierung der Summe der quadrierten Abweichungen, also Abständen, zwischen der Fit-Funktion und den aus Messwerten der Sensoreinheiten (1) und deren zugehörigen Winkelabständen gebildeten Wertepaaren, bestimmt werden,
wobei ein jeweiliges Mittel zur Bestimmung der Entfernung von einem Fahrzeug (3) aus zu einem anderen Fahrzeug (3) aus einem detektierten größten Lichtintensitätswert ein Maß für die Entfernung des anderen Fahrzeugs (3) bestimmt,
wobei die jeweilige Lichtquelle (2) moduliertes Licht aussendet und die jeweilige Auswerteeinheit die Amplitude des Modulationssignals bestimmt und als detektierten Messwert der jeweiligen Sensoreinheit, also als von der jeweiligen Sensoreinheit detektierten Lichtintensitätswert, verwendet.

2. System nach Anspruch 1,
**dadurch gekennzeichnet, dass**
das jeweilige Sensorsignal einem Filter zugeführt wird, welches das Signal-Rausch-Verhältnis verbessert.

3. System nach Anspruch 1 oder 2,
**dadurch gekennzeichnet, dass**
die jeweilige Sensoreinheit (1) einen Sensor und ein optisches Abbildungssystem aufweist, wobei der Sensor im Brennpunkt des Abbildungssystems angeordnet ist,
wobei die Ausrichtung der Sensoreinheit (1) der Verbindungslinie des Brennpunktes mit dem Mittelpunkt, insbesondere Schwerpunkt, des Abbildungssystems der Sensoreinheit (1) entspricht,
insbesondere wobei das Abbildungssystem eine Anordnung von optischem Linsen aufweist und/oder wobei das Abbildungssystem parallel ins Abbildungssystem eintretende Strahlenbündel auf den Brennpunkt fokussiert,
insbesondere wobei das Abbildungssystem einer Sammellinse entspricht.

4. System nach mindestens einem der vorangegangenen Ansprüche,
**dadurch gekennzeichnet, dass**
das Abbildungssystem ein Autofocussystem aufweist.

5. System nach mindestens einem der vorangegangenen Ansprüche,
**dadurch gekennzeichnet, dass**
mittels der Modulation der Lichtintensität durch die steuerbare Lichtquelle (2) Daten übertragbar sind zwischen den jeweiligen Fahrzeugen (3),
und/oder dass
die Sensoreinheiten (1) auf einem Träger, insbesondere auf einer Leiterplatte, angeordnet sind, insbesondere also ein Array bilden.

6. System nach mindestens einem der vorangegangenen Ansprüche,
**dadurch gekennzeichnet, dass**
das jeweilige Fahrzeug (3) ein jeweiliges Mittel zur Bestimmung der momentanen Bewegungsrichtung des anderen Fahrzeugs (3) aufweist, wobei das jeweilige Mittel zur Bestimmung der momentanen Bewegungsrichtung aus zeitlich beabstandet ausgeführten Bestimmungen der relativen Position des anderen Fahrzeuges die momentane Bewegungsrichtung bestimmt unter Berücksichtigung der Eigenbewegung des jeweiligen Fahrzeugs (3), wobei die jeweilige relative Position aus dem bestimmten Abstand zum anderen Fahrzeug (3) und der Ausrichtung der Sensoreinheit (1), welche die größte Lichtintensität detektiert, bekannt ist.

7. System nach mindestens einem der vorangegangenen Ansprüche,
**dadurch gekennzeichnet, dass**
ein Mittel zur Kollisionsvermeidung die Lenkvorrichtung des jeweiligen Fahrzeugs (3) derart ansteuert, dass eine zuvor prognostizierte Kollision mit dem anderen Fahrzeug (3) vermieden wird,
insbesondere wobei die Fahrtrichtung (5) des jeweiligen Fahrzeugs (3) derart verändert wird, dass der Winkel zwischen Fahrtrichtung (5) und Ausrichtung der Sensoreinheit (1), welche die größte Lichtintensität detektiert, zumindest für einen Zeitabschnitt vergrößert wird.

8. System nach mindestens einem der vorangegangenen Ansprüche,
**dadurch gekennzeichnet, dass**
jedes jeweilige Fahrzeug (3) eine Kamera aufweist zur Detektion von in dem als Anlage mit stationär angeordneten Markierungen ausgeführten System stationär angeordneten Markierungen, wobei die Markierungen von der Lichtquelle (2) des jeweiligen Fahrzeugs (3) beleuchtet werden und jeweils eine Identitätsinformation aufweisen,
insbesondere so dass mit in einem Speicher des jeweiligen Fahrzeugs (3) gespeicherten zur jeweiligen Identitätsinformation zugeordneten Positionsdaten eine Bestimmung der Position des jeweiligen Fahrzeugs (3) ausführbar ist.

9. Verfahren zum Betreiben eines Systems mit mehreren Fahrzeugen (3), insbesondere eines Systems nach mindestens einem der vorangegangenen Ansprüche,
wobei jedes Fahrzeug (3) eine steuerbare Lichtquelle (2) und Sensoreinheiten (1) aufweist,
wobei jede Sensoreinheit (1) am jeweiligen Fahrzeug (3) entlang einer gekrümmten und/oder gewölbten Fläche voneinander beabstandet angeordnet ist und eine Ausrichtung aufweist, deren
Winkelabstand zu einer am jeweiligen Fahrzeug (3) festgelegten Richtung, insbesondere Fahrrichtung bei Geradeausfahrt, in einem Speicher hinterlegt wird,
wobei aus den Sensorsignalen der Sensoreinheiten (1) diejenige Richtung bestimmt wird, in welcher ein anderes Fahrzeug (3) sich befindet, welches Licht mittels seiner steuerbaren Lichtquelle (2) sendet,
wobei zur Bestimmung der Richtung das Maximum einer Fitfunktion bestimmt wird, wobei die Parameter der Fitfunktion durch eine Optimierung, also durch Minimierung der Summe der quadrierten Abweichungen, also Abständen, zwischen der Fit-Funktion und den aus Messwerten der Sensoreinheiten (1) und deren zugehörigen Winkelabständen gebildeten Wertepaaren, bestimmt werden,
wobei aus einem detektierten größten Lichtintensitätswert ein Maß für die Entfernung von einem Fahrzeug (3) aus zu einem anderen Fahrzeug (3) bestimmt wird,
wobei von der jeweiligen Lichtquelle (2) moduliertes Licht ausgesendet wird und die Amplitude des Modulationssignals bestimmt wird und als detektierter Messwert der jeweiligen Sensoreinheit, also als von der jeweiligen Sensoreinheit detektierter Lichtintensitätswert, verwendet wird.

10. Verfahren nach Anspruch 9,
**dadurch gekennzeichnet, dass**
mittels der Modulation der Lichtintensität zwischen den jeweiligen Fahrzeugen (3) Daten übertragen werden.

11. Verfahren nach Anspruch 9 oder 10,
**dadurch gekennzeichnet, dass**
vom jeweiligen Fahrzeug (3) aus die Bahnkurve, insbesondere momentane Bahnkurve, des anderen Fahrzeugs (3) bestimmt wird, indem zeitlich beabstandet die relative Position des anderen Fahrzeuges bestimmt wird und daraus die momentane Bewegungsrichtung und/oder Geschwindigkeit bestimmt wird, insbesondere unter Berücksichtigung der Eigenbewegung des jeweiligen Fahrzeugs (3),
insbesondere wobei die jeweilige relative Position aus dem durch Ermittlung der Sensoreinheit (1) mit dem größten detektierten Lichtintensitätswert bestimmten Abstand zum anderen Fahrzeug (3) und der Ausrichtung der Sensoreinheit (1), welche die größte Lichtintensität detektiert, bestimmt wird.

12. Verfahren nach Anspruch 10, 9 oder 11,
**dadurch gekennzeichnet, dass**
zur Kollisionsvermeidung die Lenkvorrichtung des jeweiligen Fahrzeugs (3) derart angesteuert wird, dass eine zuvor prognostizierte Kollision mit dem anderen Fahrzeug (3) vermieden wird,
insbesondere indem die Fahrtrichtung (5) des jeweiligen Fahrzeugs (3) derart verändert wird, dass der Winkel zwischen Fahrtrichtung (5) und Ausrichtung der Sensoreinheit (1), welche die größte Lichtintensität detektiert, zumindest für einen Zeitabschnitt vergrößert wird.

## Claims

1. System comprising vehicles (3),
wherein each vehicle (3) comprises a controllable light source (2) and sensor units (1),
wherein the sensor units of each vehicle (3) are suitable for receiving light emitted by the controllable light source (2) of another vehicle (3),
wherein each vehicle comprises a respective evaluation unit for evaluating the sensor signals,
wherein each sensor unit (1) is arranged on the particular vehicle (3) in a manner spaced apart from one another along a curved and/or domed surface, and has an orientation of which the angular distance from a direction set on the vehicle (3), in particular the direction of travel during travel in a straight line, is stored in a memory,
wherein, from the sensor signals of the sensor units (1), each evaluation unit determines the direction in which another vehicle (3) emitting light by means of its controllable light source (2) is located,
wherein, to determine the direction, each evaluation unit comprises a means for determining the maximum of a fit function, wherein the parameters of the fit function are determined by an optimisation, i.e. by minimising the sum of the squared deviations, i.e. distances, between the fit function and the value pairs generated from the measured values of the sensor units (1) and their associated angular distances,
wherein a respective means for determining the distance from one vehicle (3) to another vehicle (3) determines a measure for the distance to the other vehicle (3) from a greatest detected light intensity value,
wherein each light source (2) sends out modulated light and each evaluation unit determines the amplitude of the modulation signal and uses it as the detected measured value of the relevant sensor unit, i.e. as the light intensity value detected by the relevant sensor unit.

2. System according to claim 1,
**characterised in that**
each sensor signal is fed to a filter that improves the signal-to-noise ratio.

3. System according to either claim 1 or claim 2,
**characterised in that**
each sensor unit (1) comprises a sensor and an optical imaging system, the sensor being arranged in the focus of the imaging system,
the orientation of the sensor unit (1) corresponding to the connecting line between the focus and the centre point, in particular the centre of gravity, of the imaging system of the sensor unit (1),
the imaging system in particular comprising an arrangement of optical lenses and/or the imaging system focusing, onto the focus, beams that enter the imaging system in parallel, the imaging system in particular corresponding to a convergent lens.

4. System according to at least one of the preceding claims,
**characterised in that**
the imaging system comprises an autofocus system.

5. System according to at least one of the preceding claims,
**characterised in that**
data can be transmitted between each vehicle (3) by means of the modulation of the light intensity by the controllable light source (2),
and/or **in that**
the sensor units (1) are arranged on a support, in particular on a printed circuit board, and thus in particular form an array.

6. System according to at least one of the preceding claims,
**characterised in that**
each vehicle (3) comprises a respective means for determining the current movement direction of the other vehicle (3), each means for determining the current movement direction determining the current movement direction from determinations, carried out in a manner staggered over time, of the relative position of the other vehicle while taking account of the particular vehicle's (3) own motion, each relative position being known from the determined distance from the other vehicle (3) and from the orientation of the sensor unit (1) that detects the greatest light intensity.

7. System according to at least one of the preceding claims,
**characterised in that**
an anti-collision means actuates the steering device of the relevant vehicle (3) in such a way that a previously predicted collision with the other vehicle (3) is prevented,
the direction of travel (5) of the relevant vehicle (3) in particular being changed such that the angle between the direction of travel (5) and the orientation of the sensor unit (1) that detects the greatest light intensity is enlarged at least for one time period.

8. System according to at least one of the preceding claims,
**characterised in that**
each vehicle (3) comprises a camera for detecting immovably arranged markings in the system, which is configured as a facility comprising immovably arranged markings, the markings being illuminated by the light source (2) of each vehicle (3) and each comprising an item of identity information,
in particular such that the position of each vehicle (3) can be determined using position data, which are also stored in a memory of the relevant vehicle (3) and associated with the relevant identity information.

9. Method for operating a system comprising a plurality of vehicles (3), in particular a system according to at least one of the preceding claims,
wherein each vehicle (3) comprises a controllable light source (2) and sensor units (1), wherein each sensor unit (1) is arranged on the particular vehicle (3) in a manner spaced apart from one another along a curved and/or domed surface, and has an orientation of which the angular distance from a direction set on the relevant vehicle (3), in particular the direction of travel during travel in a straight line, is stored in a memory,
wherein the direction in which another vehicle (3) emitting light by means of its controllable light source (2) is located is determined from the sensor signals of the sensor units (1), wherein, to determine the direction, the maximum of a fit function is determined, wherein the parameters of the fit function are determined by an optimisation, i.e. by minimising the sum of the squared deviations, i.e. distances, between the fit function and the value pairs formed from the measured values of the sensor units (1) and their associated angular distances, wherein a measure for the distance from one vehicle (3) to another vehicle (3) is determined from a greatest detected light intensity value,
wherein modulated light is sent out by each light source (2), and the amplitude of the modulation signal is determined and used as the detected measured value of the relevant sensor unit, i.e. as the light intensity value detected by the relevant sensor unit.

10. Method according to claim 9,
**characterised in that**
data are transmitted between each vehicle (3) by means of the modulation of the light intensity.

11. Method according to either claim 9 or claim 10,
**characterised in that**
each vehicle (3) determines the trajectory, in particular the current trajectory, of the other vehicle (3) by determining, in a manner staggered over time, the relative position of the other vehicle and determining therefrom the current movement direction and/or velocity, in particular while taking account of the relevant vehicle's (3) own motion,
each relative position in particular being determined from the distance from the other vehicle (3), as determined by identifying the sensor unit (1) having the greatest detected light intensity value, and from the orientation of the sensor unit (1) that detects the greatest light intensity.

12. Method according to claim 10, claim 9 or claim 11,
**characterised in that**
to avoid collisions, the steering device of the relevant vehicle (3) is actuated in such a way that a previously predicted collision with the other vehicle (3) is prevented,
in particular by changing the direction of travel (5) of the relevant vehicle (3) such that the angle between the direction of travel (5) and the orientation of the sensor unit (1) that detects the greatest light intensity is enlarged at least for one time period.

## Revendications

1. Système comportant des véhicules (3),
chaque véhicule (3) étant équipé d'une source de lumière (2) commandable, et d'unités détectrices (1),
les unités détectrices d'un véhicule (3) considéré étant appropriées pour recevoir de la lumière émise par la source de lumière (2) commandable d'un véhicule (3) autre,
chaque véhicule étant muni d'une unité respective d'évaluation, conçue pour évaluer les signaux de détection,
chaque unité détectrice (1) étant agencée, sur le véhicule (3) considéré, avec espacement mutuel le long d'une surface courbe et/ou bombée, et présentant une orientation dont la distance angulaire par rapport à une direction fermement établie sur ledit véhicule (3), en particulier une direction de déplacement en ligne droite, est consignée dans une mémoire, sachant que
l'unité d'évaluation considérée détermine, sur la base des signaux de détection des unités détectrices (1), la direction dans laquelle se trouve un véhicule (3) autre qui émet de la lumière au moyen de sa source de lumière (2) commandable,
sachant que, pour déterminer ladite direction, ladite unité d'évaluation considérée est dotée d'un moyen de détermination du maximum d'une fonction d'ajustement, les paramètres de ladite fonction d'ajustement étant déterminés par une optimalisation, c'est-à-dire par minimisation de la somme des écarts élevés au carré, donc des espacements entre ladite fonction d'ajustement et les paires de valeurs formées à partir de valeurs de mesure des unités détectrices (1), et des distances angulaires associées à ces dernières,
sachant qu'un moyen considéré, dévolu à la détermination de l'éloignement entre un véhicule (3) et un véhicule (3) autre, détermine un critère de l'éloignement dudit véhicule (3) autre sur la base d'une valeur maximale d'intensité lumineuse détectée,
sachant que la source de lumière (2) considérée émet de la lumière modulée, et que l'unité d'évaluation considérée détermine l'amplitude du signal de modulation, et l'utilise en tant que valeur de mesure détectée de l'unité détectrice considérée, c'est-à-dire en tant que valeur d'intensité lumineuse détectée par ladite unité détectrice considérée.

2. Système selon la revendication 1,
**caractérisé par le fait que**
le signal de détection considéré est délivré à un filtre qui améliore le rapport signal/bruit.

3. Système selon la revendication 1 ou 2,
**caractérisé par le fait que**
l'unité détectrice (1) considérée comporte un capteur et un système d'imagerie optique, ledit capteur étant implanté au point focal dudit système d'imagerie,
l'orientation de l'unité détectrice (1) correspondant à la ligne de jonction dudit point focal avec le point central, en particulier le centre de gravité dudit système d'imagerie de ladite unité détectrice (1),
sachant notamment que le système d'imagerie est muni d'un ensemble de lentilles optiques, et/ou que ledit système d'imagerie focalise, sur ledit point focal, des faisceaux de rayons pénétrant parallèlement dans ledit système d'imagerie,
lequel système d'imagerie correspond, en particulier, à une lentille collectrice.

4. Système selon au moins l'une des revendications précédentes,
**caractérisé par le fait que**
le système d'imagerie est doté d'un système de mise au point automatique.

5. Système selon au moins l'une des revendications précédentes,
**caractérisé par le fait que**
des données peuvent être transmises, entre les véhicules (3) respectifs, au moyen de la modulation de l'intensité lumineuse effectuée par la source de lumière (2) commandable ; et/ou **par le fait que**
les unités détectrices (1) sont implantées sur un support, en particulier sur une plaquette à circuits imprimés, c'est-à-dire qu'elles forment notamment un ensemble ordonné.

6. Système selon au moins l'une des revendications précédentes,
**caractérisé par le fait que**
le véhicule (3) considéré est pourvu d'un moyen respectif affecté à la détermination de la direction de mouvement instantanée du véhicule (3) autre, lequel moyen respectif, affecté à la détermination de la direction de mouvement instantanée, détermine ladite direction de mouvement instantanée sur la base de déterminations de l'emplacement relatif dudit véhicule autre, exécutées avec intervalles dans le temps et avec prise en compte du mouvement propre dudit véhicule (3) considéré, ledit emplacement relatif considéré étant connu sur la base de l'espacement déterminé par rapport audit véhicule (3) autre, et de l'orientation de l'unité détectrice (1) qui détecte l'intensité lumineuse maximale.

7. Système selon au moins l'une des revendications précédentes,
**caractérisé par le fait**
**qu'**un moyen, conçu pour éviter des collisions, pilote le dispositif de direction du véhicule (3) considéré, de manière à éviter une collision prévisionnelle avec le véhicule (3) autre, sachant notamment que la direction (5) du déplacement dudit véhicule (3) considéré est modifiée de façon telle que l'angle, entre ladite direction de déplacement (5) et l'orientation de l'unité détectrice (1) qui détecte l'intensité lumineuse maximale, soit accru pour au moins un laps de temps.

8. Système selon au moins l'une des revendications précédentes,
**caractérisé par le fait que**
chaque véhicule (3) considéré est équipé d'une caméra affectée à la détection de repères à implantation fixe, dans ledit système conçu comme une installation munie de repères à implantation fixe, lesdits repères étant éclairés par la source de lumière (2) dudit véhicule (3) considéré et comportant, à chaque fois, une information d'identité,
notamment de façon telle qu'une détermination de l'emplacement dudit véhicule (3) considéré puisse être exécutée à l'aide de données d'emplacements consignées dans une mémoire dudit véhicule (3) considéré et associées à l'information d'identité respective.

9. Procédé d'actionnement d'un système comprenant plusieurs véhicules (3), en particulier d'un système conforme à au moins l'une des revendications précédentes, chaque véhicule (3) étant équipé d'une source de lumière (2) commandable, et d'unités détectrices (1),
chaque unité détectrice (1) étant agencée, sur le véhicule (3) considéré, avec espacement mutuel le long d'une surface courbe et/ou bombée, et présentant une orientation dont la distance angulaire par rapport à une direction fermement établie sur ledit véhicule (3) considéré, en particulier une direction de déplacement en ligne droite, est consignée dans une mémoire,
sachant que la direction, dans laquelle se trouve un véhicule (3) autre qui émet de la lumière au moyen de sa source de lumière (2) commandable, est déterminée sur la base des signaux de détection desdites unités détectrices (1),
le maximum d'une fonction d'ajustement étant déterminé en vue de la détermination de ladite direction, sachant que les paramètres de ladite fonction d'ajustement sont déterminés par une optimalisation, c'est-à-dire par minimisation de la somme des écarts élevés au carré, donc des espacements entre ladite fonction d'ajustement et les paires de valeurs formées à partir de valeurs de mesure des unités détectrices (1), et des distances angulaires associées à ces dernières,
un critère, dévolu à l'éloignement entre un véhicule (3) et un véhicule (3) autre, étant déterminé sur la base d'une valeur maximale d'intensité lumineuse détectée,
sachant que de la lumière modulée est émise par la source de lumière (2) considérée, et que l'amplitude du signal de modulation est déterminée et est utilisée en tant que valeur de mesure détectée de l'unité détectrice considérée, c'est-à-dire en tant que valeur d'intensité lumineuse détectée par ladite unité détectrice considérée.

10. Procédé selon la revendication 9,
**caractérisé par le fait que**
des données sont transmises, entre les véhicules (3) respectifs, au moyen de la modulation de l'intensité lumineuse.

11. Procédé selon la revendication 9 ou 10,
**caractérisé par le fait que**
la trajectoire, notamment la trajectoire instantanée du véhicule (3) autre, est déterminée par le véhicule (3) considéré en ce sens que l'emplacement relatif dudit véhicule autre est déterminé avec intervalles dans le temps, et que la direction de mouvement et/ou la vitesse instantanée(s) est (sont) déterminée(s) sur cette base, en particulier avec prise en compte du mouvement propre dudit véhicule (3) considéré,
sachant notamment que
ledit emplacement relatif considéré est déterminé en se fondant sur l'espacement par rapport audit véhicule (3) autre, déterminé par spécification de l'unité détectrice (1) présentant la valeur d'intensité lumineuse maximale détectée, et sur l'orientation de l'unité détectrice (1) qui détecte l'intensité lumineuse maximale.

12. Procédé selon la revendication 10, 9 ou 11,
**caractérisé par le fait que**,
pour éviter des collisions, le dispositif de direction du véhicule (3) considéré est piloté de manière à éviter une collision prévisionnelle avec le véhicule (3) autre,
sachant notamment que la direction (5) du déplacement dudit véhicule (3) considéré est modifiée de façon telle que l'angle, entre ladite direction de déplacement (5) et l'orientation de l'unité détectrice (1) qui détecte l'intensité lumineuse maximale, soit accru pour au moins un laps de temps.
